# EUROPÄISCHE PATENTSCHRIFT

(11) **EP 0 735 366 B1**
(45) Veröffentlichungstag und Bekanntmachung des Hinweises auf die Patenterteilung: **10.12.2003**
(21) Anmeldenummer: 96250054.2
(22) Anmeldetag: 04.03.1996
(51) Int. Cl.: G01N 29/10, G01N 29/26

(54) **Verfahren und Vorrichtung zur Erfassung von Ungänzen an langgestreckten Werkstücken, insbesondere Rohre und Stangen**
Process and apparatus for detecting flows in oblong workpieces, in particular in pipes and rods
Procédé et dispositif pour détecter des défauts dans des pièces oblongues, en particulier des tubes et barres

(30) Priorität: 31.03.1995 DE 19513194
(43) Veröffentlichungstag der Anmeldung: 02.10.1996
(73) Patentinhaber: Mannesmannröhren-Werke AG, 45473 Mülheim a.d. Ruhr (DE)
(72) Erfinder: Schlawne, Friedhelm, Dr.rer.nat., 47249 Duisburg (DE); Schneider, Heinz, Dr.-Ing., 40489 Düsseldorf (DE)
(74) Vertreter: Meissner, Peter E., Dipl.-Ing.

(56) Entgegenhaltungen:
- EP-A- 0 160 922
- EP-A- 0 378 287
- DE-A- 2 605 405
- DE-A- 2 828 643
- US-A- 4 872 130

## Beschreibung

Die Erfindung betrifft ein Verfahren zur Erfassung von Ungänzen an langgestreckten Werkstücken, insbesondere Rohre und Stangen gemäß dem Gattungsbegriff des Hauptanspruches.

Aus der DE 39 43 226 B1 ist ein gattungsmäßiges Verfahren bekannt, bei dem der Prüfling in axialer Richtung ohne Drehung an mindestens einem feststehenden elektrodynamischen Wandler vorbeigeführt wird und im Prüfling tangential umlaufende Wellenimpulse, die sich in beide Umfangsrichtungen ausbreiten, im Takt erzeugt und an einem um ein Viertel der Spurwellenlänge der geführten Wellen zum Sendeort verschobenen Empfangsort empfangen werden. Der Ort des Empfanges und der Anregung der gleichzeitig in beide Umlaufrichtungen des Prüflings laufenden Wellenimpulse wird derart gewählt, daß die beiden ungestört laufenden Wellenimpulse am Ort des Empfängers destruktiv interferieren. Dabei wird für jeden Takt das Empfangssignal und ein ein großes Tastverhältnis aufweisendes Burstsignal, dessen Periode kleiner als ein Viertel der Umlaufzeit der Wellenimpulse um den Prüfling gewählt ist und dessen Lange der Abklingzeit der ungestört laufenden Wellenimpulse bei fehlerfreiem Werkstück entspricht, einem Peak-Detektor zugeführt und das Ausgangssignal des Peak-Detektors digitalisiert an einen Rechner übertragen.

Dieses Verfahren hat den Nachteil, daß es für Rohre mit großem Umfang, d.h. mit Durchmesser > 400 mm nicht geeignet ist. Außerdem steht keine Information über die Umfangskoordinate der Fehlstelle zur Verfügung. Das ist für geschweißte Rohre, die repariert werden, nicht akzeptabel.

Aus der EP-A-0160922 ist ein Verfahren zur zerstörungsfreien Prüfung von Werkstücken oder Bauteilen mit Ultraschall und Vorrichtung zur Durchführung des Verfahrens bekannt. Bei diesem bekannten Verfahren werden die Werkstücke nach dem Durchschallungsprinzip jeweils an gleichen Stellen nacheinander mit Ultraschall beaufschlagt, die sich unter sonst gleichen Bedingungen durch ihre einander entgegengesetzten Richtungen unterscheiden. Die in den beiden unterschiedlichen Schallrichtungen empfangenen Ultraschallsignale werden, sofern sie verschiedene Signalamplituden aufweisen, zur Bestimmung der Fehlertiefe im Werkstück mit vorgegebenen Werten verglichen, die von einem gleichen Werkstück mit Fehlern vorab bekannter Tiefe gewonnen sind.

In der DE-A-2828641 ist ein Verfahren und eine Vorrichtung zum Ultraschallprüfen von Rohren und Stangen im geradlinigen Durchlauf durch eine Anlage mit feststehenden Prüfköpfen offenbart.

Bei diesem Verfahren wird für kleinere Rohre mit Durchmessern von höchstens 100 mm der Prüfling gleichzeitig von über den gesamten Umfang verteilten, mit ihren Schallkegeln sich berührenden Schallquellen durchschallt. Die Prüfergebnisse der einzelnen Schallquellen werden getrennt voneinander ausgewertet und auch die Fehleranzeige erfolgt für jede Schallquelle getrennt. Mit diesem Verfahren ist es möglich, Prüflinge mit extrem hohen Durchlaufgeschwindigkeiten zu prüfen.

Aufgabe der Erfindung ist es, ein Verfahren zur Erfassung von Ungänzen an langgestreckten Werkstücken, insbesondere Rohre und Stangen anzugeben, das für Rohre mit Durchmesser > 400 mm und insbesondere für Großrohre mit Durchmesser > 900 mm geeignet ist und mit dem die Umfangskoordinate der Fehlstelle ermittelbar ist. Außerdem soll die erforderliche Mechanikkonstruktion einfach und kostengünstig sein.

Diese Aufgabe wird mit den im Hauptanspruch 1 angegebenen Merkmalen gelöst. Eine Vorrichtung zur Durchführung des Verfahrens ist im Anspruch 5 aufgeführt.

Erfindungsgemäß werden an mindestens Vier in Umfangsrichtung getrennt liegenden Orten in beide Umfangsrichtungen laufende Wellenimpulse erzeugt, wobei in jedem Prüftakt alternierend eine halbe Anzahl von Wandlern Zweches Emission von Wellenimpulsen getriggert wird und dabei gleichzeitig zum Empfang von Reflexionssignalen dient, während eine andere halbe Anzahl von Wandlern die entsprechenden Transmissionssignale registriert. . Dies bedeutet, dass auch sechs oder sogar acht getrennt liegende Erzeugungsorte denkbar sind. Mit weiteren Erzeugungsorten steigt aber der elektronische und mechanische Aufwand zur Beherrschung der Gesamtapparatur.

Die in Anspruch 1 definierte Anordnung hat folgende Vorteile: Bevor ein neuer Prüfschuß erfolgt, muß sich der Schall des vorhergehenden Prüfschusses totgelaufen haben. Um eine möglichst hohe Taktrate und damit eine hohe Prüfleistung zu erreichen ist deshalb die halbe Anzahl, d.h. bei Anordnung von sechs Wandlern drei Wandler gleichzeitig getriggert. Damit ist gewährleistet, dass nach insgesamt zwei Prüfschüssen der gesamte Rohrumfang überlappend geprüft ist. Die gewählte symmetrische Anordnung bewirkt eine möglichst geringe gegenseitige Störung von Reflexionssignalen und Transmissionssignalen und erzwingt gleichmäßige Abstände der Transmissionspeaks.

Darüber hinaus erzwingt die Anordnung eine optimale Überlappung der geprüften Bereiche.

Eine besondere Bedeutung kommt der Verarbeitung der anfallenden Datenmenge bei der Reflexionstechnik zu. Ein Blendengenerator erzeugt ein Rechtecksignal mit einer Periode von typisch 33 µs und einem Tastverhältnis 99:1. Die Gesamtlänge des Rechtecksignals (Burstsignal) wird dabei durchmesserabhängig an die auszuwertende Signallänge angepaßt. Beispielsweise werden für ein Rohr mit einem Meter Durchmesser 34 Blenden gesetzt. Das entspricht in Umfangsrichtung gesehen einem Raster von 50 mm. Für die ubliche Prüfaufgabe ist dieses Raster ausreichend, da die Schleifstelle immer einige Zentimeter groß sein wird und damit auch benachbarte Bereiche miterfaßt werden. In Sonderfällen mag es erforderlich sein dieses Raster auf 20 mm zu verringern. Damit nur die wirklich interessierenden Signale verarbeitet werden, werden nur Amplitudenwerte deutlich oberhalb z. B. 6 dB des Rauschpegels zusammen mit der Nummer der Blende (d. h. der Laufzeit) an den zentralen Rechner übergeben. Da die Nummer der entsprechenden Blende. in die die Reflexionsanzeige gefallen ist, bekannt ist, liegt als Information die Entfernung der moglichen Fehlstelle von dem jeweiligen kombinierten Wandler vor. Dabei kann aber noch nicht entschieden werden. ob die Fehlstelle vom Wandler aus gesehen im Uhrzeiger- oder im Gegenuhrzeigersinn liegt. Dazu muß durch eine geeignete Logik das Reflexionssignal eines weiteren Wandlers mit betrachtet werden, so daß dann ermittelt werden kann, in welchem Umfangssegment die Fehlstelle liegt. Durch geeignete statistische Entstör-Algorithmen lassen sich nach dem Abschluß des Prüfvorgangs die Daten bewerten, z. B. werden Einzelanzeigen aufgrund statistischer Störer eliminiert. Erst wenn zwei Wandler im gleichen Ortsbereich eine Anzeige detektieren ist von einer Fehlstelle auszugehen. Für eine derartig eingegrenzte Fehlstelle liegen dann zusätzlich die Amplitudenwerte vor, so daß eine Bewertung als anzuzeigender Fehler erfolgen kann.

Der Vorteil der geschilderten Vorgehensweise ist zum einen, daß durch die Art der Blendensetzung die zu verarbeitende Datenmenge für den zentralen Rechner von vornherein reduziert wird und zum anderen, daß die Umfangskoordinate der Fehlstelle ermittelbar ist. Für Präzisrohre beispielsweise ist die Ermittlung der Umfangskoordinate der Fehlstelle ohne Bedeutung, da bei Überschreiten eines festgelegten Fehlerlevels das jeweilige Rohr verworfen werden muß. Eine lokale Reparatur ist nicht möglich und ware auch viel zu aufwendig. Bei Großrohren dagegen spielt die Reparaturmöglichkeit eine große Rolle. Bei geschweißten Großrohren ist in diesem Zusammenhang noch folgendes zu beachten. Durch die gesteuerte Zuführung der Prüflinge zur Anlage muß sichergestellt werden. daß die Schweißnaht nicht unter einem der Wandler liegt. Dieser Wandler würde dann eine undefinierte und unzureichende Ankopplung aufweisen. Die Schweißnaht verursacht kleine Reflexionsanzeigen, die mehr oder weniger über die gesamte Rohrlänge zu erwarten sind. Diese Linie kann erkannt und der Naht zugeordnet werden.

Die gleichzeitige Anwendung der erfindungsgemaßen Reflexionstechnik und der an sich bekannten Durchschallung haben den Vorteil, daß Fehlstellen, die von der Form und Größe her sehr unterschiedlich sind, sicher detektiert werden. Beispielsweise ist es fast nicht möglich, an der Oberfläche flach verlaufende Mulden mittels der Reflexionstechnik sicher zu erfassen: sie werden aber mittels der Durchschallungstechnik erkannt.

Von besonderem Vorteil ist die gewählte Anordnung für eine einfache und kostengünstige Mechanikkonstruktion. Zwei Wandler werden jeweils auf einem Wandlerträger zusammengefaßt. Dieser Wandlertrager kann insgesamt auf einer Achse durch den Rohrmittelpunkt bewegt werden und er kann eine geringfügige Drehbewegung um die gekennzeichnete Achse ausführen. Ein Auswandern des Rohres während der Prüfung wird so ausgeglichen und die Mechanik kann insbesondere hinsichtlich der Abmessungseinstellung sehr einfach konstruiert sein.

Allgemein ausgedrückt sind erfindungsgemäß 2•n Wandler mit n=>2 angebracht. wobei der Abstand der Wandler auf einem Wandlerträger 360°/4/n beträgt. Der Abstand der jeweils zwei Wandler zusammenfassenden Wandlerträger ist 360°/n.

Das vorgeschlagene Verfahren ist auch für eine Innenprüfung von Rohren geeignet. soweit der Innendurchmesser einen Durchgang der Mechanikkonstruktion zuläßt. Dabei ist die erfindungsgemaß sich ergebende einfache Konstruktion von Vorteil.

In der Zeichnung wird anhand eines Ausfuhrungsbeispieles das erfindungsgemaße Verfahren und die dazugehörige Vornchtung näher erläutert. Es zeigt:
- Figur 1: eine Prinzipskizze zur Ausführung des erfindungsgemaßen Verfahrens:
- Figur 2: schematisch das Empfangssignal des Wandlers 1 bei getriggerten Sendewandlern 1, 3, 5;
- Figur 3: schematisch das Empfangssignal des Wandlers 2 bei getriggerten Wandlern 1, 3, 5;
- Figur 4: das Blockschaltbild der Sendeseite;
- Figur 5: das Blockschaltbild der Empfangsseite.

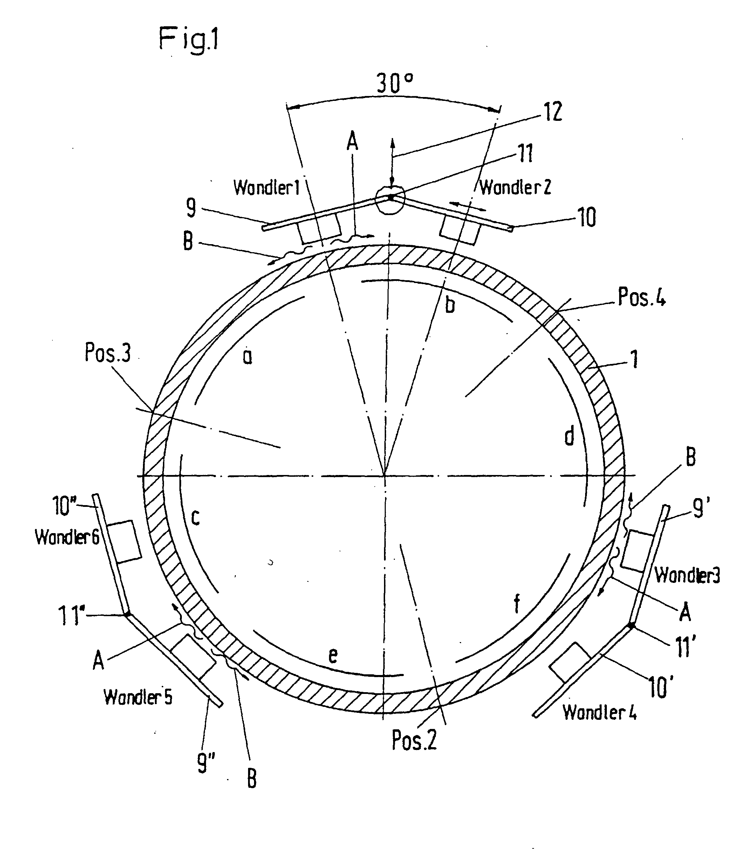

In Figur 1 ist der prinzipielle Aufbau zur Durchführung des erfindungsgemäßen Verfahrens dargestellt. Von insgesamt sechs in einem geringen Abstand zum Prüfling 1 angeordneten Wandlern 1 bis 6 strahlen gleichzeitig drei (hier in dieser Darstellung die Wandler 1, 3, 5) in beide Umfangsrichtungen des Prüflings 1 einen Wellenimpuls A. B ab. In diesem Beispiel ist der abgestrahlte Wellenimpuls A bzw. B durch eine Wellenlinie charakterisiert und per Festlegung soll A der abgestrahlte Wellenimpuls im Uhrzeigersinn und B der im Gegenuhrzeigersinn sein. Beide Wellenimpulse A, B laufen in Umfangsrichtung mehrfach um und treffen sich an zwei definierten Punkten des Umfangs wieder. Einmal am jeweiligen Wandler selbst, d.h. bei den Wandlern 1, 3 5 und auf der jeweils genau gegenüberliegenden um 180° versetzt liegenden Seite hier mit Position 2. 3, 4 bezeichnet. Die hier eingesetzten Wandler 1 bis 6 werden als kombinierte Wandler bezeichnet, da sie sowohl Sende- als auch Empfangswicklungen aufweisen. Um die erforderliche Prüfempfindlichkeit sicherzustellen, wird in erster Linie die Reflexionstechnik eingesetzt, d.h. es werden an einer Fehlstelle reflektierte Wellenanteile detektiert. Darüber hinaus werden auch Transmissionssignale gemessen und bewertet.

Um bei Großrohren. d.h. mit Durchmessern > 900 mm den gesamten Prüflingsumfang lückenlos überwachen zu können, sind kombinierte Wandler 1 bis 6 erforderlich. Diese sechs Wandler 1 bis 6 sind in einer Ebene auf dem Umfang in den Positionen minus 15°, 15° (Wandler 1, 2); 105°, 135° (Wandler 3, 4) sowie 225°, 255° (Wandler 5, 6) angeordnet. Drei Sende-Wandler (1, 3, 5) oder (2, 4, 6) werden jeweils gleichzeitig getriggert.

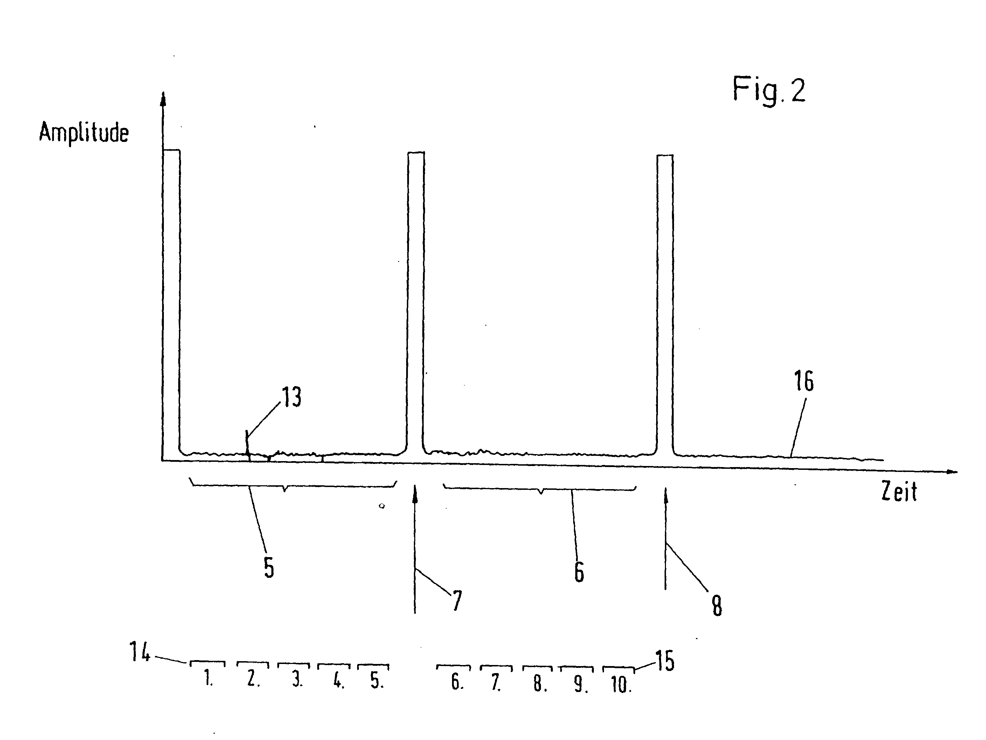

Erfindungsgemaß sind jeweils zwei Wandler. d.h. Wandler 1,2; Wandler 3,4 bzw. Wandler 5, 6 auf einem Wandlerträger angeordnet. Der Wandlerträger besteht aus zwei Haltern 9, 10. 9'. 10'; 9", 10", die um einen Drehpunkt 11, 11', 11" gedreht werden können. Der Doppelpfeil 12 im Bereich der Wandler 1, 2 deutet die Bewegungsmoglichkeit des Wandlerträgers an. Dadurch ist eine einfache Anpassung an unterschiedliche Abmessungen moglich
Zur Erläuterung des Verfahrens wird in einem Takt I beispielsweise der Wandler 1 betrachtet. Figur 2 gibt schematisch ein Empfangssignal wieder. Direkt unter dem Wandler können aufgrund des Übersprechens von Sende- und Empfangswicklungen keine Reflexionssignale empfangen werden. Nach Abklingen der Verstarkerubersteuerung werden Reflexionssignale aus den gekennzeichneten Abschnitten a, b (Figur 1) empfangen. Dies entspricht dem Abschnitt 5 in Figur 2. Da die Wandler 3, 5 symmetrisch bzgl. Wandler 1 angeordnet sind, treffen die von diesen Wandlern 3, 5 emittierten Wellen praktisch zeitgleich im Wandler ein und verursachen aufgrund ihrer großen Amplitude eine Übersteuerung des Empfangsverstärkers des Wandlers 1. Da von einer undefinierten Überlagerung der beiden Wellenzuge ausgegangen werden muß, ist eine Amplitudenmessung in diesem Zeitbereich ohnehin nicht sinnvoll. Es folgen Reflexionssignale aus den Abschnitten c und d (Figur 1), worauf die von den Wandlern 3 und 5 jeweils in der anderen Umfangsrichtung emittierten Wellen zeitgleich im Wandler 1 eintreffen Dies entspricht dem Abschnitt 6 in Figur 2. Eine Messung in einem langeren Zeitintervall, d.h. Signale aus den Abschnitten e,f (Figur 1) ist nicht sinnvoll, da die Zuordnung einzelner Anzeigen zunehmend komplizierter wird und Reflexionsanzeigen aufgrund der Schalldämpfung zu kleine Amplituden aufweisen. Es ist jedoch zu beachten, daß ein weiterer Prüfschuß erst erfolgen kann. wenn der Schall sich vollständig "totgelaufen" hat, d.h. die Amplitude der umlaufenden Welle im Rauschen verschwindet. Die Empfangssignale der Wandler 3, 5 weisen eine analoge Struktur auf. Da jedes Umfangssegment a bis f somit zweifach geprüft wird, bietet sich prinzipiell die Entscheidungsmöglichkeit. woher eine Reflexionsanzeige kommt, da die Wandler 1 bis 6 ja bidirektional arbeiten. Zur vollständigen Überwachung des Gesamtumfangs wird mit den Wandlern 2, 4, 6 im folgenden Takt II analog vorgegangen. Dabei ist in den Randbereichen der überwachten Segmente jeweils davon auszugehen, daß diese bereits im Takt I überwacht wurden, da allgemein die in einem Takt nicht prüfbaren Abschnitte kleiner sind als die prüfbaren.

Neben den Reflexionssignalen können in jedem Zeittakt auch Transmissionssignale empfangen werden. Bezogen auf den Wandler 1 zeigt die zweite Amplitude 7 in Figur 2 die Transmissionssignale der Wandler 3. 5 beispielsweise in Richtung A und die dritte Amplitude 8 in Figur 2 die Transmissionssignale der Wandler 3, 5 in Gegenrichtung B.

Zur Erlauterung der Ermittlung der Umfangskoordinate zeigt der Abschnitt 5 in Fig. 2 die Amplitude 13 einer Fehlstelle. Die im jeweiligen Abschnitt 5 bzw. 6 gesetzten Blenden 14 bzw. 15 sind schematisch unterhalb der Bildschirmanzeige eingetragen. Beispielhaft sind pro Abschnitt je 5 Blenden eingezeichnet, die in Wirklichkeit sehr viel enger nebeneinander stehen. Die Zuordnung erfolgt nun in der Weise, daß der Peak-Detektor die über den Rauschuntergrund 16 sich erhebende Amplitude 13 erfaßt und den maximal gemessenen Amplitudenwert abspeichert. Gleichzeitig wird die Nummer der gesetzten Blende gezählt. In diesem Falle ist es von links aus gerechnet die Blende Nr. 2 der Blendenzeile 14. Da die Nummer der Blende einer Laufzeit entspricht. kann in einfacher Weise errechnet werden, wieviel mm entfernt vom Wandler 1 sich die Fehlstelle 13 befindet. Wird nun beim nachsten Prüfschuß der Wandler 2,4,6 diese Fehlstelle 13 erneut von einem der Wandler 2,4,6 detektiert, dann hat man erstens die Bestätigung, daß es sich nicht um eine statistische Störung handelt und zweitens kann man dann durch logische Verknupfung der beiden Laufzeiten die Umfangskoordinate der Fehlstelle 13 genau festlegen. Die Zuordnung der Wandlerpaare 1,2; 3,4; 5,6 zur Uhrseitlage des Prüflings erfolgt bei nahtlosen Rohren mittels einer vorher aufgetragenen Pilotlinie. wahrend bei geschweißten Rohren üblicherweise die Schweißnaht diese Funktion übernimmt.

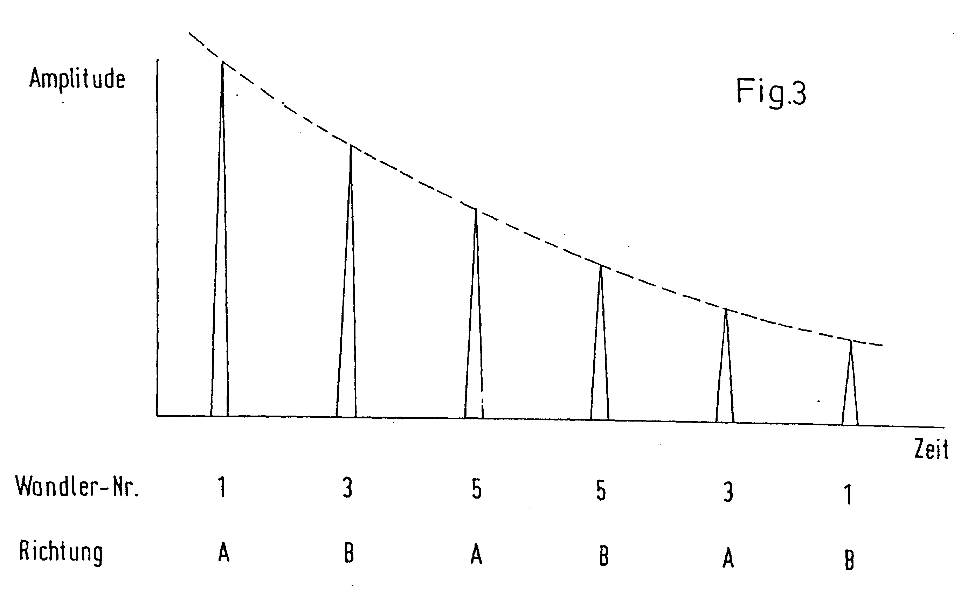

Figur 3 gibt schematisch das Empfangssignal von Wandler 2 im Zeittakt I wieder. In diesem Zeittakt I sind die Wandler 1, 3, 5 getriggert. Wie in Figur 1 bereits festgelegt, bedeutet die Richtung A, daß der Schall in Uhrzeigersinn und Richtung B in Gegenuhrzeigersinn bezogen auf Figur 1 läuft. Der zeitliche Abstand der Empfangssignale der Schallwellen, die von den drei im Zeittakt aktivierten Sendewandlern eintreffen, ist aufgrund der gewählten Symmetrie der Prüfkopfanordnung äquidistant. Um eine Übersteuerung der Transmissionssignale zu vermeiden, ist der Verstärkungsfaktor deutlich gennger als beim Empfang von Reflexionssignalen. Transmissionssignale mit gleicher Struktur wie der Wandler 2 empfangen zeitgleich die Empfänger der Wandler 4 und 6.

Im zweiten Zeittakt II werden die Wandler 2. 4, 6 getriggert und die Wandler 1, 3, 5 registrieren die Transmissionssignale. Die dargestellte Prüfung erfolgt während des Längstransportes des Prüflings 1, wobei die Lineargeschwindigkeit mehr als 10 m/min. beträgt. Während der Prüfung ist eine Rotation des Prüflings 1 oder ein mechanisches Abscannen der Prüflingsoberfläche mit den Wandlern nicht erforderlich.

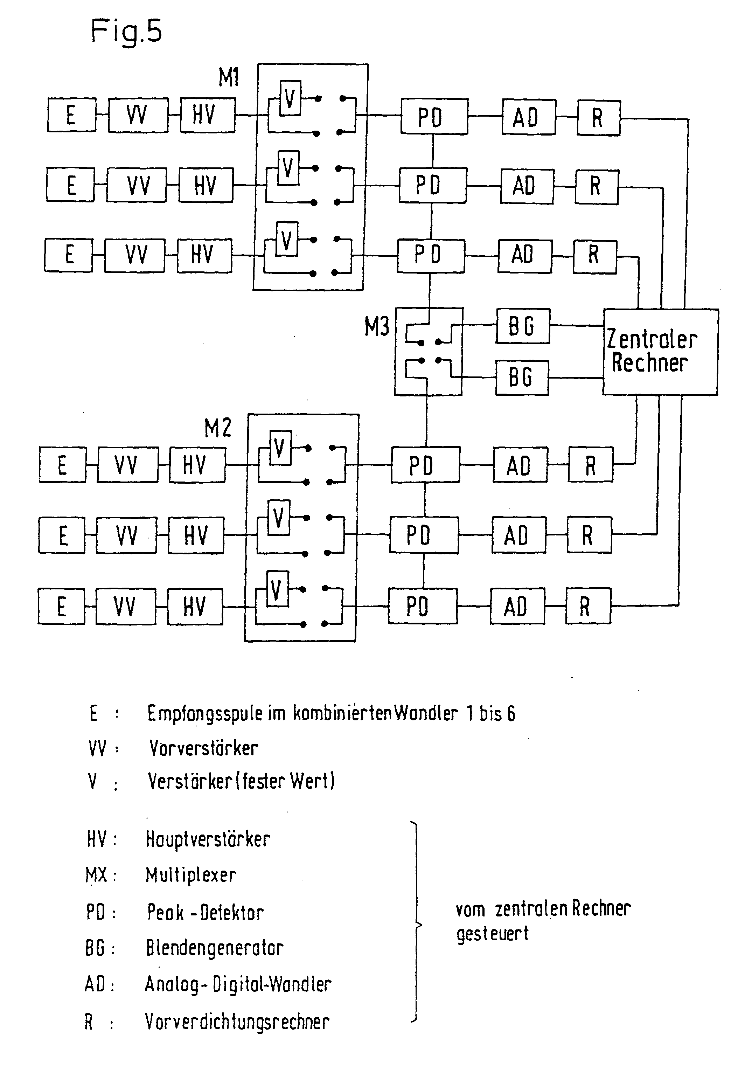

Was die Elektronik betrifft, so weisen die sechs kombinierten elektrodynamischen Wandler 1 bis 6 jeweils eine eigene Vorortelektronik und einen eigenen Auswertekanal auf. Jede Vorortelektronik enthält einen vierkanaligen Sendeverstärker V und einen rauscharmen Vorverstärker W für die Empfangssignale der kombinierten Wandler 1 bis 6 (Figur 5). Die Kabellänge zwischen einem Wandler und der zugehorigen Vorortelektronik ist aus Gründen der Dämpfung meistens kurz.

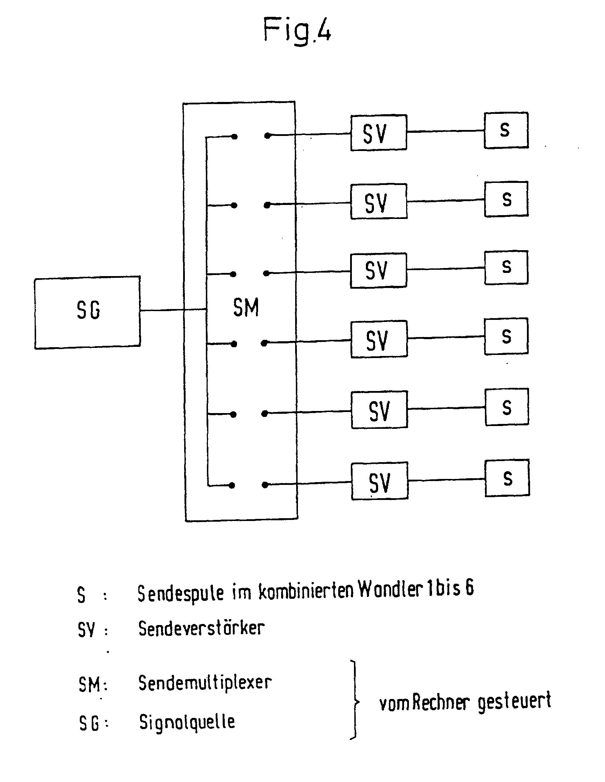

Auf der Sendeseite wird eine von Zentralrechnern getriggerte Signalquelle (Burstgenerator) eingesetzt, die ein Burstsignal zur Ansteuerung der Sendeverstärker erzeugt (Figur 4). Über einen Multiplexer werden in jedem Prüftakt die drei parallel zu betreibenden Sendeelektroniken und damit die Wandler mit dem gleichen Burstsignal angesteuert. Die Empfangssignale werden vorverstärkt in die Auswerteelektronik eingespeist (s. Figur 5). Jeder Auswertekanal beinhaltet zunächst einen rechnerersetzbaren Hauptverstärker HV. um einen geeigneten Signalpegel einstellen zu können. Jeder Empfangswandler wird abwechselnd zum Empfang von Reflexionssignalen bzw. zur Messung von Transmissionssignalen eingesetzt. In zwei Multiplexern M1, M2 mit jeweils drei Ausgangen werden Verstärker V mit festem Verstärkungswert integriert, um schnell (taktweise) von hoher Verstärkung auf niedrige Verstärkung umschalten zu können.

Die Prüfung der gesamten Prüflingsoberfläche soll unter Verwendung einer möglichst hohen Taktrate erfolgen, um zum einen eine schnelle Prüfung zu ermöglichen und zum anderen eine möglichst sichere Prüfung zu gewahrleisten. Dies erfordert eine drastische Reduktion der anfallenden Datenmenge, insbesondere bei der Reflexionstechnik. Die Reduktion der zu verarbeitenden Signale erfolgt in der Weise. daß erstens nur Amplitudenwerte deutlich oberhalb des Rauschpegels an den zentralen Rechner übergeben und zweitens das Burstsignal (Blende) so ausgelegt ist. daß es in Abhängigkeit von der Prüfaufgabe die erforderliche Ortsauflösung ergibt.

## Patentansprüche

1. Verfahren zur Erfassung von Ungänzen an langgestreckten Werkstücken, insbesondere Rohre und Stangen, bei dem der Prüfling (1) in axialer Richtung ohne Drehung des Werkstücks an in einer Querschnittsebene über den Umfang des Prüflings (1) versetzt liegenden, Sende- und Empfangsspulen aufweisenden feststehenden elektrodynamischen Wandlem (W1 - W6) vorbeigeführt wird und im Prüfling (1) alternierend im Prüftakt mittels der Sendespulen an verschiedenen Orten in beide verschiedenen Orten entlang des Umfangs des Prüflings im Uhrzeigersinn bzw. gegen den Uhrzeigersinn laufende Wellenimpulse erzeugt werden und der Ort des Empfanges für die Reflexionssignale verschieden ist von denen der Transmissionssignale und die jeweilige Folge von Empfangssignalen getrennt bewertet werden und für jeden Prüftakt das Empfangssignal und ein Burstsignal einem Peak-Detektor (PD) zugeführt werden und das Ausgangssignal des Peak-Detektors (PD) digitalisiert an einen Rechner übertragen wird,
**dadurch gekennzeichnet, dass** mittels in Wandlerpaaren (W₁/W₂, W₃/W₄, W₅/W₆) an mindestens 2n, mit n ≥ 2, entlang des Umfangs des Werkstücks getrennt liegenden Orten im Uhr- und entgegen dem Uhrzeigersinn laufende Wellenimpulse erzeugt werden, wobei alternierend eine halbe Anzahl der Wandler (W1, W3, W5) zwecks Emission von Wellenimpulsen getriggert wird und dabei gleichzeitig zum Empfang von Reflexionssignalen dient, während die andere halbe Anzahl der Wandler (W2, W4, W6) die entsprechenden Transmissionssignale registrieren, wobei der Empfang der Transmissionssignale bei einer deutlich geringeren Verstärkung im Vergleich zum Empfang der Reflexionssignale erfolgt und für die Messung der Reflexionssignale das Burstsignal so ausgelegt ist, dass es in Abhängigkeit von der Prüfaufgabe die erforderliche Ortsauflösung ergibt und nur Amplitudenwerte zur Ermittlung der Umfangskoordinaten von Fehlstellen oberhalb eines wählbaren Abstandes des in einer Blende des Burstsignals gemessenen Amplitudenwertes von dem Rauschpegel weiter verarbeitet werden, wobei der Abstand zwischen benachbarten Wandlerpaaren jeweils 360°/n beträgt.

2. Verfahren nach Anspruch 1,
**dadurch gekennzeichnet,**
**dass** alternierend im Prüftakt an sechs in Ufnfangsrichtung liegenden Orten in beide Umfangsrichtung laufende Wellenimpulse erzeugt werden.

3. Verfahren nach Anspruch 1 oder 2,
**dadurch gekennzeichnet,**
**dass** für Großrohre die Periode des Burstsignals für die Messung der Reflexionssignale so gewählt wird, dass diese einer Ortsauflösung in Umfangsrichtung von 5 cm oder weniger entspricht.

4. Verfahren nach den Ansprüchen 1 bis 3,
**dadurch gekennzeichnet,**
**dass** die durch eine Fehlstelle verursachten Reflexionswellen, die in mindestens zwei Wandlern zur Anzeige kommen, zur Ermittlung der Umfangskoordinate der Fehlstelle mittels einer geeigneten Logik in einem zentralen Rechner miteinander verknüpft werden.

5. Vorrichtung zur Durchführung des Verfahrens nach Anspruch 1 oder 2 mit in einer Umfangsebene über den Umfang des Prüflings (1) versetzt liegenden, getrennte Sende- und Empfangsspulen aufweisenden elektrodynamischen Wandlern (W1 - W6), die feststehend angeordnet und mit einem Blendengenerator (BG) und einer Auswerteeinheit verbunden sind, wobei im Falle mehrerer Sendespulen eines Wandlers (W1 - W6) alle Sendespulen im gleichen Takt angesteuert werden,
**dadurch gekennzeichnet,**
**dass** 2n Wandler (W1 - W6) mit n ≥ 2 symmetrisch über den Umfang verteilt angeordnet sind, wobei jeweils zwei Wandler (W1, 2; W3, 4; W5, 6) auf einem Wandlerträger zusammengefasst sind und der Abstand der Wandlerträger 360°/n beträgt und jeder kombinierte Wandler 1 bis 6 eine eigene Vorortelektronik und einen eigenen Auswertekanal aufweist, und dass die halbe Anzahl der Wandler (W1, W3, W5) zur Emission von Wellenimpulsen geträggert wird und gleichzeitig zum Empfang von Reflexionssignalen dient, während die andere halbe Anzahl der Wandler (W2, W4, W6) gleichzeitig zum Empfang von Transmissionssignalen dient.

6. Vorrichtung nach Anspruch 5,
**dadurch gekennzeichnet,**
**dass** der Abstand der zwei auf einem Wandlerträger angeordneten Wandler (W1-6) 360°/4/n beträgt.

7. Vorrichtung nach den Ansprüchen 5 und 6,
**dadurch gekennzeichnet,**
**dass** der Wandlerträger für jeden Wandler (W1-6) einen Halter (9, 10, 9', 10', 9", 10") aufweist und um einen zwischen den beiden Wandlern (W1,2; W3,4; W5,6) liegenden Drehpunkt (11, 11', 11 ") gedreht werden kann.

8. Vorrichtung nach den Ansprüchen 5 bis 7,
**dadurch gekennzeichnet,**
**dass** die Kabellänge zwischen den Wandlern 1 bis 6 und der zugehörigen Vorortelektronik möglichst kurz ist.

## Claims

1. Method of detecting flaws in elongate workpieces, in particular pipes and rods, in which the test piece (1) is moved axially without rotation of the workpiece past fixed electrodynamic transformers (W1-W6) which are distributed around the circumference of the test piece (1) in a cross-sectional plane and which have transmission and reception coils, and wave pulses are generated in the test piece so as to alternate in the test cycle by means of the transmission coils at different locations in both different locations and so as to extend along the circumference of the test piece in a clockwise or anti-clockwise direction, and the location where the reflex signals are received is different from that of the transmission signals, and the respective sequence of reception signals is separately evaluated and for each test cycle the reception signal and a burst signal are fed to a peak detector (PD) and the output signal of the peak detector (PD) is transmitted in digital form to a computer, **characterised in that** by means of n transformer pairs (W1/W2, W3/W4, W5/W6) in at least 2n, where n ≥ 2, locations lying separated along the circumference of the workpiece wave pulses extending in the clockwise and anti-clockwise direction are generated, wherein alternately half the number of transformers (W1, W3, W5) is triggered for the emission of wave pulses and at the same time serves to receive reflex signals, whilst the other half of the transformers (W2, W4, W6) register the corresponding transmission signals, wherein the reception of transmission signals takes place at a significantly lower amplification than the reception of reflex signals, and the burst signal is so contrived for the measurement of reflex signals that it produces the necessary location resolution according to the test objective, and in order to determine the circumferential coordinates of defects only amplitude values are further processed which are above a selectable distance of the amplitude value measured in a screen of the burst signal from the noise level at which the distance between adjacent transformer pairs is respectively 360°/n.

2. Method according to claim 1, **characterised in that** alternatingly in the test cycle, wave pulses are generated which extend in both circumferential directions at six locations in the circumferential direction.

3. Method according to claim 1 or 2, **characterised in that** for large pipes the period of the burst signal for measuring the reflex signals is so selected as to correspond to a location resolution in the circumferential direction of 5 cm or less.

4. Method according to claims 1 to 3, **characterised in that** the reflex waves caused by a defect and showing up in at least two transformers are linked together by means of suitable logic in a central computer in order to determine the circumferential coordinates of the defect.

5. Apparatus for carrying out the method according to claim 1 or 2 having electrodynamic transformers (W1-W6) which are distributed over the circumference of the test piece (1) in a circumferential plane, which have separate transmission and reception coils, which are disposed stationarily, and which are connected to a screen generator (BG) and an evaluating unit, wherein in the case of plural transmission coils of one transformer (W1-W6) all transmission coils are triggered in the same cycle, **characterised in that** 2n transformers (W1-W6), where n ≥ 2, are distributed symmetrically over the circumference, every two transformers (W1, 2; W3, 4; W5, 6) are combined on one transformer carrier and the distance between the transformer carriers is 360°/n and each combined transformer 1 to 6 has its own suburban electronics and its own evaluation channel, and **in that** half the number of transformers (W1, W3, W5) is triggered for transmitting wave pulses and at the same time acts as a reception for reflex signals, whilst the other half of the transformers (W2, W4, W6) simultaneously acts as a reception for transmission signals.

6. Apparatus according to claim 5, **characterised in that** the distance between the two transformers (W1-W6) disposed on one transformer carrier is 360°/4/n.

7. Apparatus according to claims 5 and 6, **characterised in that** the transformer carrier for each transformer (W1-6) has a holder (9, 10, 9', 10', 9", 10") and can be rotated about a fulcrum ( 11, 11', 11") lying between the two transformers (W1, 2; W3, 4; W5, 6).

8. Apparatus according to claims 5 to 7, **characterised in that** the cable length between transformers 1 to 6 and the associated suburban electronics is as short as possible.

## Revendications

1. Procédé pour la détermination de défauts dans des pièces allongées, en particulier des tubes et des barres, dans lequel l'échantillon (1) passe en direction axiale, sans rotation, devant des transducteurs électrodynamiques fixes (W1-W6) comportant des bobines d'émission et des bobines de réception réparties à la périphérie de l'échantillon (1) dans un plan transversal et des impulsions d'ondes sont engendrées dans l'échantillon (1) en alternance et en cadence au moyen des bobines d'émission en différents endroits, les impulsions parcourant la périphérie de l'échantillon en deux endroits différents dans le sens des aiguilles d'une montre ou dans le sens inverse, et le lieu de réception des signaux de réflexion est différent de ceux des signaux de transmission et les suites de signaux de réception sont à chaque fois évaluées séparément et, pour chaque signal d'horloge, le signal de réception et un signal de transmission en rafale sont transmis à un détecteur de pics (PD) et le signal de sortie du détecteur de pics, numérisé, est transmis à un calculateur,
**caractérisé en ce que**, au moyen de n paires de transducteurs (W1/W2, W3/W4, W5/W6), sont engendrées, à la périphérie de la pièce en des endroits séparés, au moins 2n (avec n ≥ 2) impulsions d'ondes circulant dans le sens des aiguilles d'une montre et dans le sens inverse, en alternance une moitié des transducteurs (W1, W3, W5) étant activée en vue de l'émission d'impulsions d'ondes et servant en même temps à la réception des signaux de réflexion, tandis que l'autre moitié des transducteurs (W2, W4, W6) enregistre les signaux de transmission correspondants, la réception des signaux de transmission ayant lieu avec une amplification nettement plus faible que la réception des signaux de réflexion et pour la mesure des signaux de réflexion le signal de transmission en rafale étant dimensionné de façon qu'il en résulte la résolution d'emplacement nécessaire en fonction du but de l'essai et seules étant traitées, pour la détermination des coordonnées périphériques d'emplacements de défauts, les amplitudes au-dessus d'un écart pouvant être choisi à discrétion d'une valeur d'amplitude mesurée dans une fenêtre du signal de transmission en rafale par rapport au niveau de bruit, l'écart entre deux paires de transducteurs voisins étant, à chaque fois, égal à 360°/n.

2. Procédé selon la revendication 1,
**caractérisé en ce que**, en alternance et en cadence, on engendre des impulsions d'ondes parcourant la périphérie dans les deux sens à six endroits de ladite périphérie.

3. Procédé selon la revendication 1 ou 2,
**caractérisé en ce que**, pour de gros tubes, la période du signal de transmission en rafale pour la mesure des signaux de réflexion est choisie de façon qu'elle corresponde à une résolution d'emplacement de 5 cm ou moins.

4. Procédé selon les revendications 1 à 3,
**caractérisé en ce que** les ondes de réflexion provoquées par un emplacement de défaut, qui sont indiquées dans au moins deux transducteurs, sont combinées dans un calculateur central pour la détermination des coordonnées périphériques des emplacements de défauts au moyen d'une logique appropriée.

5. Dispositif pour la mise en oeuvre du procédé selon la revendication 1 ou 2, comportant des transducteurs électrodynamiques (W1-W6) répartis à la périphérie de l'échantillon (1) dans un plan transversal et présentant des bobines d'émission et des bobines de réception séparées, lesdits transducteurs étant agencés de façon fixe et étant reliés à un générateur de fenêtres (BG) et à une unité d'exploitation, dans lequel, en cas de pluralité de bobines d'émission pour un transducteur (W1-W6), toutes les bobines d'émission sont commandées à la même cadence,
**caractérisé en ce que** 2n transducteurs (W1-W6) avec n ≥ 2 sont répartis symétriquement à la périphérie, deux transducteurs (W1,2 ; W3,4 ; W5,6) étant à chaque fois rassemblés sur un support et l'écart des supports de transducteurs est égal à 360°/n et chaque transducteur combiné 1 à 6 comporte une propre électronique in situ et un propre canal d'exploitation, et **en ce que** la moitié des transducteurs (W1, W3, W5) est commandée pour l'émission d'impulsions d'ondes et sert en même temps pour la réception de signaux de réflexion, tandis que l'autre moitié des transducteurs (W2, W4, W6) sert en même temps à la réception des signaux de transmission.

6. Dispositif selon la revendication 5,
**caractérisé en ce que** l'écart des deux transducteurs (W1-6) agencés sur un support de transducteurs est égal à 360°/4/n.

7. Dispositif selon les revendications 5 et 6,
**caractérisé en ce que** le support de transducteurs comporte un appui (9, 10, 9', 10', 9", 10") pour chaque transducteur (W1-6) et peut pivoter autour d'un point d'articulation (11, 11', 11") disposé entre les deux transducteurs (W 1,2 ; W3,4 ; W5,6).

8. Dispositif selon les revendications 5 à 7,
**caractérisé en ce que** la longueur des câbles entre les transducteurs 1 à 6 et l'électronique in situ associée est aussi courte que possible.
